**Europäisches Patentamt**

**European Patent Office**

**Office européen des brevets**

(19)

(11) Veröffentlichungsnummer: **0 166 770**
**B1**

(12) **EUROPÄISCHE PATENTSCHRIFT**

(45) Veröffentlichungstag der Patentschrift:
02.09.87

(51) Int. Cl.⁴: **B 01 D 53/06,** B 01 J 20/20

(21) Anmeldenummer: **85900465.7**

(22) Anmeldetag: **18.12.84**

(86) Internationale Anmeldenummer:
**PCT/EP 84/00431**

(87) Internationale Veröffentlichungsnummer:
**WO 85/02786 (04.07.85 Gazette 85/15)**

(54) **VERFAHREN ZUR KONTINUIERLICHEN REINIGUNG VON ABGASEN MIT AKTIVKOHLE.**

(30) Priorität: 21.12.83 DE 3346176
24.11.84 DE 3442925

(43) Veröffentlichungstag der Anmeldung:
08.01.86 Patentblatt 86/2

(45) Bekanntmachung des Hinweises auf die Patenterteilung:
02.09.87 Patentblatt 87/36

(84) Benannte Vertragsstaaten:
BE DE FR GB NL

(56) Entgegenhaltungen:
EP-A-0 002 568
DE-A-1 619 849
DE-B-1 034 148
GB-A-757 149

(73) Patentinhaber: **Rütgerswerke Aktiengesellschaft,
Mainzer Landstrasse 217, D-6000 Frankfurt a.Main
1 (DE)**

(72) Erfinder: **OESTE, Franz, D., Steinbergstrasse 4,
D-6309 Münzenberg 2 (DE)**
Erfinder: **KEMPFERT, Joachim, R., Im Sand 21,
D-6242 Kronberg 2 (DE)**

## Beschreibung

Die Erfindung bezieht sich auf ein Verfahren zur kontinuierlichen Reinigung von Abgasen durch Chemosorption und Adsorption der gasförmigen Schadstoffe an Aktivkohlen und Desorption dieser Schadstoffe oder ihrer Reaktionsprodukte.

In der Literatur werden trockene und nasse bzw. naßkatalytische Verfahren zur adsorptiven Abgasreinigung unterschieden. Die trockenen Verfahren arbeiten oberhalb des Taupunktes der Abgase, erfordern bei einer Zurückführung des Adsorbens aber entweder eine thermische Desorption oder nach einer Extraktion mit einem flüssigen Extraktionsmittel eine Trocknung. Die nassen bzw. naßkatalytischen Verfahren arbeiten hingegen unterhalb des Taupunktes der Abgase, so daß die meist wasserdampfgesättigten Reingase aufgeheizt werden müssen. Dies wird oft als Nachteil empfunden, der sich jedoch mit Hilfe eines Wärmeaustauschers zwischen heißem Abgas und Reingas beseitigen läßt. Die Desorption der Schadstoffe erfolgt durch Extraktion oder Waschen des Adsorbens.

Als Beispiel für ein trockenes Verfahren zur kontinuierlichen Reinigung von Abgasen mit Aktivkohle sei das Rauchgasentschwefelungsverfahren der Bergbau-Forschung (Chemische Industrie, August 1975, Seiten 437 bis 461) genannt. Ein Wanderschichtreaktor wird hier als Adsorber verwendet. Die beladene Aktivkohle wird im Desorber mit erhitztem Sand gemischt und bei einer Temperatur zwischen 500 und 650° C regeneriert. Dabei fällt ein $SO_2$-Reichgas an, das zu Schwefel oder Schwefelsäure aufgearbeitet werden kann. Da in dem sich ständig erneuernden Filterbett auch Feststoffpartikel abgeschieden werden, ist eine zusätzliche Staubabscheidung nicht erforderlich. Nachteilig ist jedoch die für das Verfahren erforderliche apparativ und energetisch aufwendige Regenerationsanlage. Außerdem ist je nach Härte der verwendeten Aktivkohle mit einem nicht unerheblichen Abrieb zu rechnen, der durch ständige Ergänzung frischer Aktivkohle kompensiert werden muß.

Als Beispiel für ein naßkatalytisches Verfahren zur kontinuierlichen Reinigung von Abgasen mit Aktivkohle sei der Lurgi-SULFACID-Prozeß (Lurgi Schnellinformation T 1260/11.77) genannt. Das Verfahren wird ebenfalls zur Abscheidung von Schwefeldioxid aus Abgasen genutzt. Das Rohgas wird dabei bei einer Temperatur von 50 bis 80° C durch ein Aktivkohlefestbett geleitet. In Gegenwart von Wasser und Sauerstoff wird das Schwefeldioxid in der Aktivkohle zu Schwefelsäure umgewandelt, die periodisch mit Wasser im Gegenstrom ausgewaschen wird. Um eine gleichmäßige Reinigung der Abgase zu erzielen, wird dabei jeweils nur ein Segment des Festbettes mit Wasser bedüst. Die Adsorptionsfähigkeit dieses Segments vermindert sich infolge des die Aktivkohlekörner umschließenden Wasserfilms erheblich. Die Gefahr eines Schwefeldioxid- Durchbruchs ist jedoch gering, da gleichzeitig der Strömungswiderstand erhöht wird. Um die Dicke des Wasserfilms zu mindern und damit die Adsorptionsgeschwindigkeit zu erhöhen, wird die gewaschene Aktivkohle mit dem ungesättigten Rohgas getrocknet.

Als nachteilig ist anzusehen, daß aufgrund der langen Trocknungszeit bis zur Erlangung der maximalen Adsorptionsfähigkeit der trockenen Aktivkohle eine Höhe des Festbettes erforderlich ist, die weit größer ist, als sie für die Adsorption an unbeladener Aktivkohle erforderlich wäre. Weiterhin ist das Festbett mit der periodischen Desorption für staubhaltige Rohgase weniger geeignet, da der Staub sich zwischen den Aktivkohlekörnern festsetzt und durch die laminare Strömung des Wasserfilms nicht fortgespült wird. Es wird daher vorgeschlagen, die Rohgase vor dem Eintritt in das Festbett mit der in dem Prozeß anfallenden Dünnsäure zu waschen und diese dadurch aufzukonzentrieren. Damit würde man jedoch ein gesättiges Rohgas erhalten, das nicht in der Lage ist, das gewaschene Festbettsegment zu trocknen. Als Vorteil ist der geringe apparative und energetische Aufwand bei diesem Verfahren anzusehen.

Aufgabe der Erfindung ist es, ein nasses bzw. naßkatalytisches Verfahren zur kontinuierlichen Reinigung von Abgasen mit Aktivkohle zu entwickeln, das die geschilderten Nachteile nicht aufweist.

Diese Aufgabe wird dadurch gelöst, daß die Aktivkohle im Rotor einer Siebzentrifuge angeordnet ist, der von dem Abgas durchströmt wird, während gleichzeitig das Desorptionsmittel gleichmäßig die Aktivkohleschicht von innen nach außen durchfließt.

Als Desorptionsmittel reicht oft schon das Kondensat des im Abgas enthaltenen Wasserdampfes. Zusätzliche Waschflüssigkeit kann auf die im Bereich des Rotors perforierte Hohlwelle der Siebzentrifuge gleichmäßig aufgetragen werden. Dies erfolgt entweder mit Düsen oder vorzugsweise mittels auf der Innenseite der Hohlwelle schleifender Bürsten. Als Waschflüssigkeit dient im allgemeinen Wasser oder Dünnsäure. Als Aktivkohle kann eine Schüttung aus gekörnter Aktivkohle wie Strangpreßlinge oder Pellets, insbesondere solche mit einem Durchmesser von weniger als 1 mm verwendet werden. Bevorzugt werden jedoch Vliese, Filze oder Gewebe von Aktivkohlefasern, die ring- oder spiralförmig in den Rotor eingelegt werden.

Je nach Art der vorliegenden Schadstoffe kann die katalytische Aktivität der Aktivkohle durch Dotierung mit Schwermetall- oder Halogenverbindungen erhöht werden, wie dies beim Chemosorptionsverfahren mit Aktivkohle üblich ist.

Wie Vorversuche gezeigt haben, reichen bereits geringe Zentrifugalbeschleunigungen von 5 G (5-fache Erdbeschleunigung) aus, um die Dicke des Flüssigkeitsfilmes erheblich zu reduzieren. Vorzugsweise wird jedoch mit einer mittleren Zentrifugalbeschleunigung zwischen 100 und 800 G gearbeitet. Ein Aktivkohlevlies mit einem Faserdurchmesser von 8 µm, einem Raumgewicht von 50 kg/m³ und einer spezifischen Oberfläche von 1200 m²/g nimmt bei Raumtemperatur etwa das 20-fache des Aktivkohlevolumens an 40 %iger Schwefelsäure auf. Das entspricht etwa einer mittleren Schichtdicke von 31 µm. Bei einer Zentrifugalbeschleunigung von 5 G verringert sich diese Schichtdicke auf etwa 11,6 µm. Bei 100 G verbleibt nur noch eine mittlere Schichtdicke von etwa 8 µm und bei 800 G eine von 2 µm auf der Aktivkohlefaser.

Es hat sich weiterhin gezeigt, daß bei im Gegenstrom geführten Abgasen staubförmige Verunreinigungen von dem strömenden Wasserfilm ebenfalls ausgetragen werden, so daß eine Verstopfung des Aktivkohlebettes nicht zu befürchten ist.

Die Abgase können jedoch auch im Gleichstrom mit der Waschflüssigkeit geführt werden. Dadurch verringert sich die Druckdifferenz zwischen der Reingas- und der Rohgasseite, und die abgeschleuderte Waschflüssigkeit enthält keine nicht umgesetzten, gelösten Schadgase mehr.

Da die adsorbierten Schadstoffe bzw. deren Reaktionsprodukte kontinuierlich ausgewaschen werden, sind nur sehr geringe Betthöhen erforderlich im Vergleich mit dem bekannten Verfahren. Diese Tatsache erlaubt den Einsatz von sehr feinkörniger Aktivkohle und Aktivkohlefasern mit sehr großen Austauschflächen, ohne daß der Druckverlust zu hoch wird.

Neben Schwefeldioxid können mit dem erfinderischen Verfahren ebenso wie mit den beschriebenen bekannten Verfahren auch Schadstoffe wie HCl, $Cl_2$, $COCl_2$, $PH_3$, HF, $NO_x$ oder $H_2S$ aus Abgasen entfernt werden. Das Desorptionsmittel muß dabei in einigen Fällen entsprechend dem jeweiligen Schadstoff ausgewählt werden. So werden $H_2S$ und Mercaptane an Aktivkohle zu Schwefel und Disulfiden oxidiert und können mit organischen Lösungsmitteln extrahiert werden.

Obwohl das Verfahren durchaus geeignet ist, auch Abgase mit geringem Schadstoffgehalt zu reinigen, zeigen sich die Vorteile insbesondere bei hoher Schadstoffbelastung, die erhöhte Betthöhen bzw. schnell aufeinanderfolgende Waschzyklen bei dem bekannten Verfahren erfordern, so daß eine Trocknung des Festbettes nur unvollständig durchgeführt werden kann. Es hat sich überraschenderweise gezeigt, daß das Verfahren im hohen Maß unempfindlich gegenüber starken Schwankungen im Schadstoffgehalt der Abgase ist und auch eine hohe Konzentration der Schadstoffe oder ihre Reaktionsprodukte im Desorbat zugelassen werden können, ohne daß die Qualität des Reingases vermindert wird.

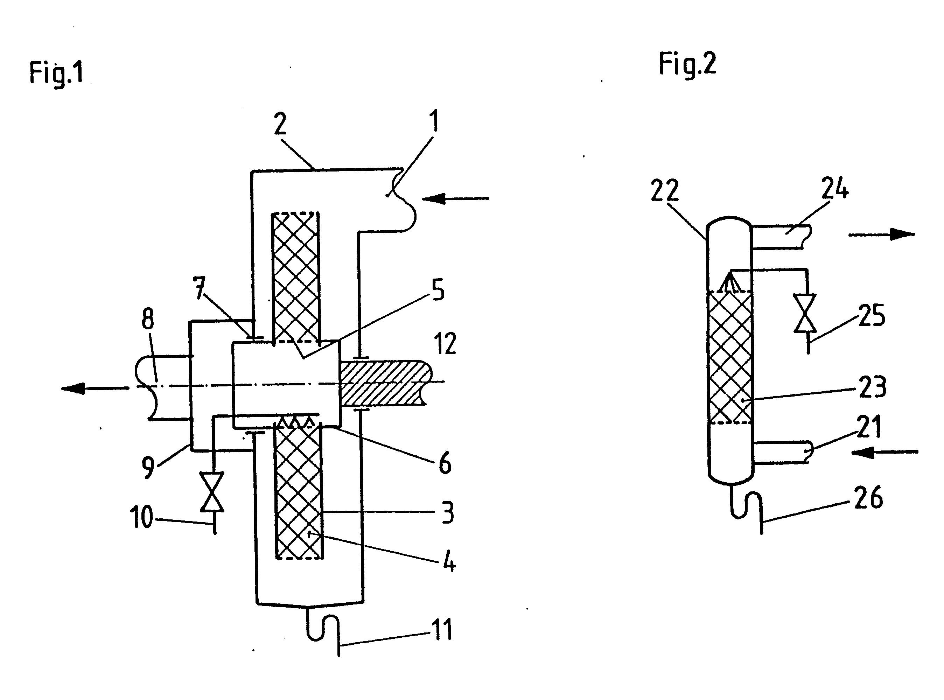

Das erfinderische Verfahren wird anhand einiger Beispiele näher beschrieben, ohne darauf beschränkt zu sein. Die Versuche wurden mit der in Fig. 1 dargestellten Apparatur durchgeführt. Sie zeigt eine Siebzentrifuge mit der Eintrittsöffnung (1) für das Abgas in dem vorderen Gehäuse (2) der Zentrifuge. Das Abgas durchströmt beim Gegenstromverfahren die in dem Rotor (3) angeordnete Aktivkohleschicht (4) und tritt als Reingas aus dem perforierten Teil (5) der Hohlwelle (6) äus. Die Hohlwelle (6) ist an der Stelle (7) gegen das vordere Gehäuse (2) abgedichtet. Das Reingas verläßt die Zentrifuge über einen Auslaß (8) im hinteren Gehäuseteil (2). Das Desorptionsmittel wird über die Leitung (10), die an ihrem Ende mit Bohrungen und einem Bürstenkörper ausgestattet ist, auf den perforierten Teil (5) der Hohlwelle aufgetragen. Das Desorbat wird über einen Siphon (11) am unteren Teil des vorderen Gehäuses (2) ausgetragen. Der Rotor (3) kann über die Welle (12) mit der gewünschten Drehzahl angetrieben werden.

Beim Gleichstromverfahren gelangt das Abgas über den perforierten Teil (5) der Hohlwelle (6) in die Zentrifuge. Das Reingas verläßt sie über die Öffnung (1). Die Zentrifuge kann zusätzlich mit Einbauten, beispielsweise Leitblechen innerhalb und/oder außerhalb des Rotors versehen sein, um den Druckverlust der Gasströmung zu mindern und die Verteilung des Gases auf den Umfang des Rotors zu vergleichmäßigen.

Die Vergleichsversuche wurden in der in Fig. 2 dargestellten Apparatur durchgeführt. Das Abgas tritt über die Leitung (21) in die Adsorptionskolonne (22) ein und strömt durch die Aktivkohleschicht (23). Das Reingas verläßt die Adsorptionskolonne (22) über die Leitung (24). Das Desorptionsmittel wird über die Leitung (25) auf die Aktivkohleschicht (23) aufgesprüht. Das Desorbat wird über den Siphon (26) ausgetragen.

**Beispiel 1**

Als Reaktor wird die in Fig. 1 dargestellte Apparatur mit einer Aktivkohleschicht aus zylindrischen Aktivkohleformkörpern auf Steinkohlebasis (Zylinderdurchmesser: 4 mm, Schüttgewicht: 320 kg/m³, spezifische Oberfläche: 1200 m²/g) verwendet. Die Betthöhe in Strömungsrichtung beträgt 20 cm. Die Drehzahl des Rotors wird so eingestellt, daß in der Mitte der Betthöhe eine Zentrifugalbeschleunigung von 200 G (G = Erdbeschleunigung) besteht.

Das Abgas ($SO_2$ = 2 g/m³; $H_2O$ = 190 g/m³; Luft) wird bei 80° C über die Eintrittsöffnung (1) in die Apparatur eingeleitet. Die Gasgeschwindigkeit in der Mitte der Betthöhe beträgt 0,1 m/s auf den freien Querschnitt bezogen. Im Gegenstrom wird die Aktivkohle mit Wasser als Desorptionsmittel bei 80° C gewaschen. Auf den mittleren freien Querschnitt der Aktivkohleschicht bezogen werden 2,7 kg/m²h Desorptionsmittel gebraucht. Im Reingas werden noch 0,4 g/m³ $SO_2$ gemessen. Das entspricht einem Reinigungseffekt von 80 %. Als Desorbat wird eine 25 %ige Schwefelsäure erhalten.

**Beispiel 2**

Als Reaktor wird die in Fig. 1 dargestellte Apparatur mit einer Aktivkohleschicht aus mehreren übereinander liegenden ringförmigen Wicklungen eines Aktivkohlefaservlieses auf Viskosebasis (Faserdurchmesser: 8 μm, Raumgewicht: 50 kg/m³, spezifische Oberfläche 1200 m²/g) verwendet. Die Betthöhe beträgt 10 cm. Die Zentrifugalbeschleunigung und die Gasgeschwindigkeit entsprechen dem Beispiel 1.

Das Abgas ($PH_3$ = 0,5 g/m³, $O_2$ = 7 g/m³, $H_2O$ = 17 g/m³, Stickstoff) wird bei 20°C im Gegenstrom zur Waschflüssigkeit in die Apparatur eingeleitet. Im Gegenstrom wird die Aktivkohleschicht mit 1,32 kg/m²h (auf den mittleren freien Querschnitt bezogen) 10 %iger Phosphorsäure bei 20°C gewaschen. Das Reingas ist über die gesamte Versuchsdauer von 30 h frei von Phosphin. Das Desorbat enthält etwa 30 Gew.% Phosphorsäure. Die Druckdifferenz zwischen Rohgaseintritt und Reingasaustritt beträgt 1180 Pa (120 mm WS).

**Beispiel 3**

Unter den gleichen Bedingungen wie in Bespiel 1 wird ein Abgas (HCl = 15 g/m³, $H_2O$ = 190 g/m³, Luft) an einer Aktivkohleschicht aus Sphäroiden auf Pechbasis (Durchmesser: 0,7 mm, spezifische Oberfläche: 1200 m²/g) adsorbiert und mit 26,4 kg/m²h (bezogen auf den freien mittleren querschnitt) Wasser desorbiert.

Im Reingas kann auch nach mehrstündigem Betrieb kein HCl gemessen werden. Im Desorbat sind 17 Gew.% Salzsäure enthalten.

**Beispiel 4**

Unter ähnlichen Bedingungen wie in Beispiel 2 wird Abgas ($Cl_2$ = 0,5 g/m³, $COCl_2$ = 0,5 g/m³, $H_2O$ 17 g/m³, Stickstoff) an einem 20 cm hohen Aktivkohlefaservliesbett chemosorbiert. Als Desorptionsmittel werden 79 kg/m²h (bezogen auf den freien mittleren Querschnitt) Wasser verwendet. Die Zentrifugalbeschleunigung beträgt 300 G. Während der 20-stündigen Versuchsdauer können auf der Reingasseite keine meßbaren Durchbrüche von Chlor, Salzsäure oder Phosgen festgestellt werden. Das Desorbat enthält zwischen 0,4 und 0,5 Gew.%

Salzsäure.

**Beispiel 5**

Das Beispiel 1 wird mit einer Aktivkohlefaserschicht wie in Beispiel 4 bei einer Zentrifugalbeschleunigung von 600 G ohne zusätzliche Wasseraufgabe wiederholt. Der aus dem Abgas kondensierte Wasserdampf wirkt als Desorptionsmittel.

Das Reingas enthält auch nach 8-stündigem Betrieb der Anlage kein meßbares $SO_2$. Das Desorbat hat einen Schwefelsäuregehalt von 30 Gew.%.

**Beispiel 6**

Das Beispiel 2 wird wiederholt, wobei das Abgas im Gleichstrom mit der Waschflüssigkeit geführt wird. Das Reingas ist ebenfalls frei von Phosphin und auch in der Waschflüssigkeit kann kein Phosphin nachgewiesen werden. Die Druckdifferenz zwischen Rohgaseingang und Reingasausgang beträgt im Gegensatz zu der im Beispiel 2 nur 590 Pa (60 mm WS).

**Beispiel 7**

Das Beispiel 5 wird mit einem 1 cm dicken Aktivkohlefaservlies bei einer Zentrifugalbeschleunigung von 600 G wiederholt. Sowohl bei der Gegenstromfahrweise wie im Beispiel 1 als auch bei der Gleichstromfahrweise ist kein $SO_2$ im Reingas nachweisbar.

**Beispiel 8** (Vergleich)

Das Beispiel 1 wird unter sonst gleichen Bedingungen in der in Fig. 2 dargestellten Vergleichsapparatur wiederholt. Im Reingas werden noch 1,5 g/m³ $SO_2$ gemessen. Das entspricht einem Reinigungseffekt von nur 25 %. Das Desorbat enthält nur 8 Gew.% Schwefelsäure.

**Beispiel 9** (Vergleich)

Das Beispiel 2 wird unter sonst gleichen Bedingungen in der in Fig. 2 dargestellten Vergleichsapparatur wiederholt. Der Versuch muß nach kurzer Zeit abgebrochen werden, da das Waschwasser die Aktivkohleschicht ohne Unterbrechung des Abgasstromes nicht durchfließen kann.

**Beispiel 10 (Vergleich)**

Das Beispiel 3 wird unter sonst gleichen Bedingungen in der in Fig. 2 dargestellten Vergleichsapparatur wiederholt. Auch dieser Versuch muß abgebrochen werden, weil das Waschwasser die Aktivkohleschicht ohne Unterbrechung des Abgasstromes nicht durchfließen kann.

**Beispiel 11 (Vergleich)**

Das Beispiel 5 wird unter sonst gleichen Bedingungen in der in Fig. 2 dargestellten Vergleichsapparatur wiederholt. Es wird kein Desorbat erhalten. Nach einer Versuchsdauer von etwa 4 h zeigt sich ein Schwefeldioxid-Durchbruch. Im weiteren Verlauf des Versuchs steigt die Schwefeldioxid-Konzentration im Reingas ständig an.

Wie die Beispiele zeigen, ist es möglich, unter Einwirkung einer Zentrifugalbeschleunigung in Höhe einer mehrfachen Erdbeschleunigung bei gleichzeitiger Desorption die Adsorption bzw. Chemosorption von Schadstoffen aus Abgasen an Aktivkohlen wesentlich zu steigern. Bei sehr dichten Aktivkohleschichten wird die gleichzeitige Desorption unter diesen Verhältnissen erst möglich. Weiterhin läßt sich aus den Beispielen erkennen, daß bei gleicher Betthöhe infolge intensiverer Desorption erheblich längere Adsorptions- bzw. Chemosorptionszeiten verwirklicht werden können. Schon nach kurzer Zeit stellt sich im Gegensatz zu den Verfahren nach dem Stand der Technik in dem gesamten Bett ein Gleichgewicht ein, das sich nicht mehr verändert, sodaß die Gefahr eines Schadstoffdurchbruchs auch im Dauerbetrieb nicht besteht.

**Patentansprüche**

1. Verfahren zur kontinuierlichen nassen bzw. naßkatalytischen Reinigung von Abgasen durch Chemosorption und Adsorption der gasförmigen Schadstoffe an Aktivkohlen und Desorption dieser Schadstoffe oder ihrer Reaktionsprodukte, dadurch gekennzeichnet, daß die Aktivkohle im Rotor einer Siebzentrifuge angeordnet ist, der von dem Abgas durchströmt wird, während gleichzeitig das Desorptionsmittel die Aktivkohleschicht von innen nach außen durchfließt.

2. Verfahren nach Anspruch 1, dadurch gekennzeichnet, daß zur Desorption eine Waschflüssigkeit auf die im Bereich des Rotors perforierte Hohlwelle der Siebzentrifuge gleichmäßig aufgetragen wird.

3. Verfahren nach Anspruch 2, dadurch gekenzeichnet, daß die Waschflüssigkeit mittels auf der Innenseite der Hohlwelle schleifenden Bürsten aufgetragen wird.

4. Verfahren nach Anspruch 1, dadurch gekennzeichnet, daß als Aktivkohle Vliese, Filze und Gewebe aus Aktivkohlefasern verwendet werden.

5. Verfahren nach Anspruch 1, dadurch gekennzeichnet, daß als Aktivkohle gekörnte Kohlen mit einem mittleren Durchmesser von weniger als 1 mm verwendet werden.

6. Verfahren nach Anspruch 1, dadurch gekennzeichnet, daß der Rotor der Siebzentrifuge mit einer solchen Drehzahl umläuft, daß in der Mitte der Aktivkohleschicht eine Zentrifugalbeschleunigung entsteht, die der 100- bis 800-fachen Erdbeschleunigung entspricht.

7. Verfahren nach Anspruch 1, dadurch gekennzeichnet, daß es in einem Temperaturbereich von 20 bis 80°C durchgeführt wird.

8. Verfahren nach Anspruch 1, dadurch gekennzeichnet, daß die Zentrifuge innerhalb und/oder außerhalb des Rotors mit Leitblechen versehen ist.

**Claims**

1. A process for the continuous wet or wet-catalytic purification of waste gases by chemisorption and adsorption of gaseous pollutants on activated carbon and desorption of these pollutants or their reaction products, characterized in that activated carbon is arranged in the rotor of a centrifugal filter which is passed through by the waste gas, while at the same time the desorbent flows through the activated carbon bed from the center outwardly.

2. Process according to claim 1, characterized in that for desorption a wash liquid is applied uniformly on the hollow shaft of the centrifugal filter perforated in the region of the rotor.

3. Process according to claim 2, characterized in that the wash liquid is applied by means of brushes sliding on the inside of the hollow shaft.

4. Process according to claim 1, characterized in that mats, felts and fabrics of activated carbon fibers are used as activated carbon.

5. Process according to claim 1, characterized in that granulated carbons having a mean diameter of less than 1 mm are used as activated carbon.

6. Process according to claim 1, characterized in that the rotor of the centrifugal filter rotates at a speed such that in the center of the activated carbon bed a centrifugal acceleration results which corresponds to 100 to 800 times gravity acceleration.

7. Process according to claim 1, characterized in that it is carried out in a temperature range of from 20° to 80°C.

8. Process according to claim 1, characterized in that the centrifuge is provided with baffles inside and/or outside the rotor.

**Revendications**

1. Procédé pour la purification continue par voie humide ou catalytique humide des gaz d'échappement par chimiosorption et adsorption des substances nocives gazeuses sur charbon actif et désorption de ces substances nocives ou de leurs produits de réaction, caractérisé en ce que le charbon actif est disposé dans le rotor d'une centrifugeuse à tamis, le gaz d'échappement passant à travers le rotor, tandis que simultanément l'agent de désorption traverse la couche de charbon actif depuis l'intérieur vers l'extérieur.

2. Procédé selon la revendication 1, caractérisé en ce que, pour la désorption, un liquide de lavage est amené d'une manière uniforme sur l'arbre creux perforé de la centrifugeuse à tamis dans la zone du rotor.

3. Procédé selon la revendication 2, caractérisé en ce que le fluide de lavage est amené au moyen de brosses de frottement sur le coté intérieur de l'arbre creux.

4. Procédé selon la revendication 1, caractérisé en ce qu'en tant que charbon actif, on utilise des nappes de fibres, feutres et tissus en fibres de charbon actif.

5. Procédé selon la revendication 1, caractérisé en ce qu'en tant que charbon actif on utilise des charbons sous forme de grains d'un diamètre moyen inférieur à 1 mm.

6. Procédé selon la revendication 1, caractérisé en ce que le rotor de la centrifugeuse à tamis tourne à un nombre de tours tel qu'au centre de la couche de charbon actif se produit une accélération centrifuge, qui correspond de 100 à 800 fois à l'accélération terrestre.

7. Procédé selon la revendication 1, caractérisé en ce qu'il est effectué dans un domaine de température de 20 à 80°C.

8. Procédé selon la revendication 1, caractérisé en ce que la centrifugeuse est munie de tôles de guidage à l'intérieur et/ou à l'extérieur du rotor.

Fig.1

Fig.2

0 166 770